# EUROPEAN PATENT SPECIFICATION

(11) **EP 2 793 291 B1**
(45) Date of publication and mention of the grant of the patent: **14.09.2016**
(21) Application number: 13186796.2
(22) Date of filing: 01.10.2013
(51) Int. Cl.: H01M 2/20, H01M 2/26, H01M 2/34, H01M 10/658

(54) **RECHARGEABLE BATTERY MODULE**
WIEDERAUFLADBARES BATTERIEMODUL
MODULE DE BATTERIE RECHARGEABLE

(30) Priority: 18.04.2013 KR 20130043047
(43) Date of publication of application: 22.10.2014
(73) Proprietor: Samsung SDI Co., Ltd., Gyeonggi-do 449-577 (KR)
(72) Inventor: Han, Min-Yeol, Yongin-si, Gyeonggi-do (KR); Park, Zin, Yongin-si, Gyeonggi-do (KR); Yoon, Hae-Kwon, Yongin-si, Gyeonggi-do (KR); Lee, Seung-Bok, Yongin-si, Gyeonggi-do (KR)
(74) Representative: Gulde & Partner

(56) References cited:
- EP-A1- 2 372 808
- EP-A1- 2 515 363
- WO-A1-2013/005526
- DE-A1-102010 044 455
- DE-A1-102010 046 642
- DE-A1-102010 051 669
- JP-A- 2007 250 301
- US-A- 6 152 776

## Description

### BACKGROUND

### 1. Field

The described technology relates generally to a battery module.

### 2. Description of the Related Art

Unlike a primary battery that cannot be recharged, a rechargeable battery may be repeatedly charged and discharged. A small-capacity rechargeable battery is used for small portable electronic devices such as mobile phones, notebook computers, camcorders, and the like, while a large-capacity rechargeable battery is used as a motor-driving power source for hybrid vehicles and electric vehicles.

The rechargeable battery may be used in small electronic devices as a single-cell battery, or in a motor-driving power source, etc. as a battery module where a plurality of cells is electrically connected.

The document DE 10 2010 051669 A1 discloses a rechargeable battery module known from prior art.

### SUMMARY

The scope of the invention is defined by the subject-matter of the appended claims.

Embodiments are directed to a rechargeable battery module including a plurality of rechargeable batteries, each of the rechargeable batteries including an electrode assembly including a positive electrode and a negative electrode, and a first electrode terminal and a second electrode terminal connected to the electrode assembly, and a bus bar electrically connecting the rechargeable batteries, the bus bar including a bus bar fuse part. The first electrode terminal is connected to and installed with a current collecting member that connects the electrode assembly and the first electrode terminal, the current collecting member including a current collecting fuse part. An operation current at which the bus bar fuse part is melted is less than an operation current at which the current collecting fuse part is melted.

The operation current at which the current collecting fuse part is melted may be about 1.5 times to about 3 times the operation current at which the bus bar fuse part is melted.

The operation current of the bus bar fuse part may be about 500 A to about 3,000 A, and the operation current of the current collecting fuse part may be about 3,000 A to about 10,000 A.

The bus bar may include a curved fuse groove. The bus bar fuse part may contact a side end of the fuse groove.

The bus bar may include a curved fuse protrusion. The bus bar fuse part contacts a side end of the fuse protrusion.

The bus bar fuse part may be enclosed by a heat insulating member.

The bus bar includes a curved portion, the bus bar fuse part may be positioned to contact a side end of the curved portion, and the heat insulating member encloses the bus bar fuse part and the curved portion together.

The heat insulating member may be formed by insert injection.

The current collecting fuse part may be enclosed by a heat dissipating member having heat dissipating capacity.

The heat dissipating member may be formed by insert injection.

The current collecting member may include a fuse hole. A first current collecting fuse part may contact one end of the fuse hole, and a second current collecting fuse part may contact another end of the fuse hole.

The bus bar may include a plurality of fuse grooves that are curved and that are spaced apart in a width direction of the bus bar. The bus bar fuse part may be between the fuse grooves and may contact the side end of the fuse groove.

### BRIEF DESCRIPTION OF THE DRAWINGS

Features will become apparent to those of skill in the art by describing in detail exemplary embodiments with reference to the attached drawings in which:
FIG. 1 illustrates a perspective view of a battery module according to an exemplary embodiment.
FIG. 2 illustrates a perspective view of a rechargeable battery according to the exemplary embodiment.
FIG. 3 illustrates a cross-sectional view taken along the line III-III of FIG. 1.
FIG. 4 illustrates an exploded perspective view of an electrode assembly and a current collecting member according to the exemplary embodiment.
FIG. 5 illustrates a cross-sectional view of a current collecting member according to the exemplary embodiment.
FIG. 6 illustrates a perspective view of a bus bar according to the exemplary embodiment.
FIG. 7 illustrates a cross-sectional view of a bus bar according to the exemplary embodiment.
FIG. 8A illustrates a view of a state that a bus bar fuse part is melted in a bus bar according to the exemplary embodiment, and FIG. 8B is a view of a state that a groove is melted according to the exemplary embodiment.
FIG. 9 illustrates a perspective view of a bus bar according to another exemplary embodiment.
FIG. 10 illustrates a cross-sectional view taken along the line X-X of FIG. 9.
FIG. 11 illustrates a perspective view of a bus bar according to another exemplary embodiment.
FIG. 12 illustrates a cross-sectional view taken along the line XII-XII.

### DETAILED DESCRIPTION

In the drawing figures, the dimensions of layers and regions may be exaggerated for clarity of illustration. Like reference numerals refer to like elements throughout.

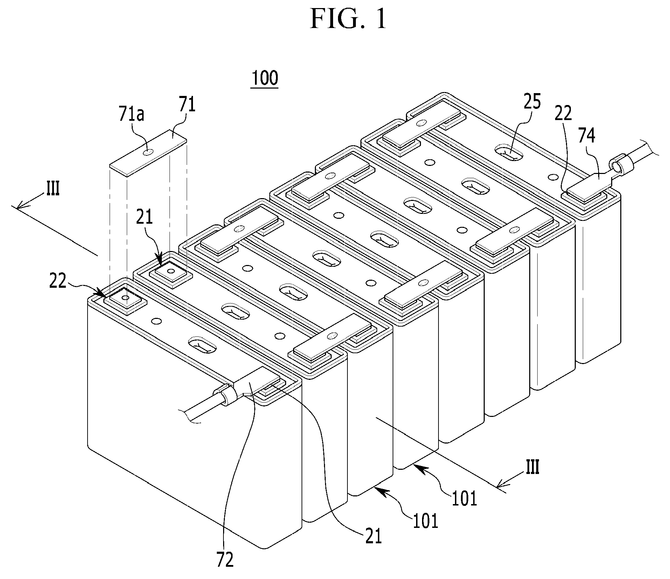

FIG. 1 illustrates a perspective view of a battery module according to an exemplary embodiment.

Referring to FIG. 1, a battery module 100 of the first exemplary embodiment includes a plurality of rechargeable batteries 101, and a bus bar 71 for electrically connecting a first electrode terminal 21 and a second electrode terminal 22 of the neighboring ones of the rechargeable batteries 101.

The rechargeable batteries 101 may be arranged to be stacked. The rechargeable batteries 101 include first electrode terminals 21 and second electrode terminals 22. When the first electrode terminals 21 and the second electrode terminals 22 are alternately disposed, the bus bar 71 may be welded to be combined to the terminals to couple the rechargeable batteries 101 in series.

A first module terminal 72 for drawing out a current may be installed in the first electrode terminal 21 of the rechargeable battery 101 disposed on a side end of a first end from among the stacked rechargeable batteries 101. A second module terminal 74 for drawing out the current may be installed in the second electrode terminal 22 of the rechargeable battery disposed on a side end of a second end.

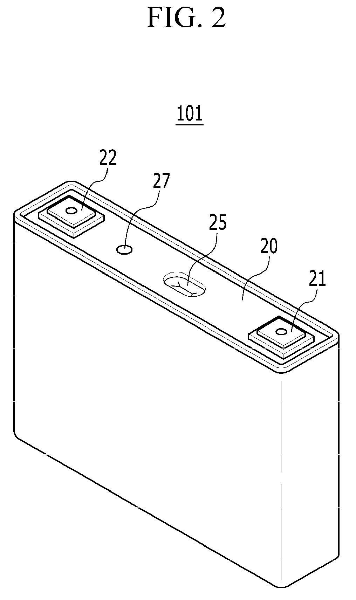

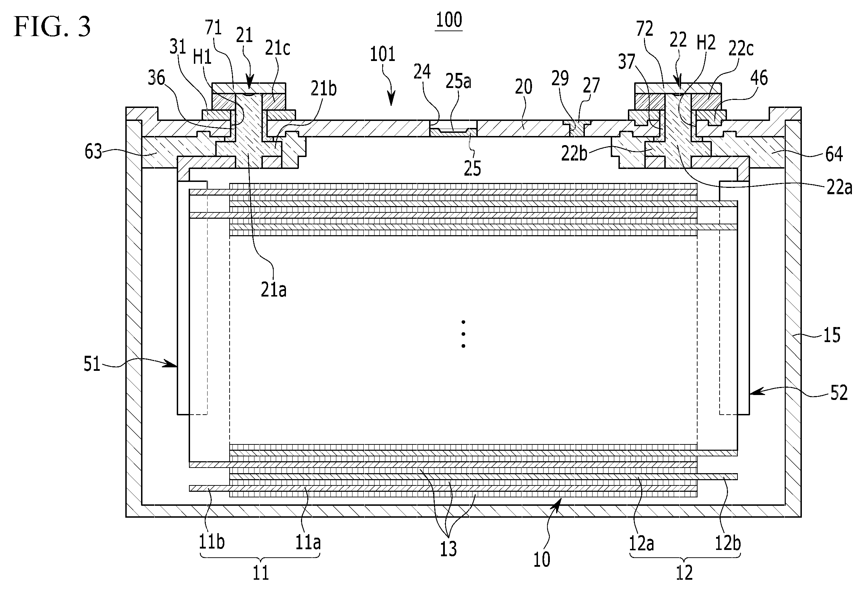

FIG. 2 illustrates a perspective view of a rechargeable battery according to the exemplary embodiment, and FIG. 3 illustrates a cross-sectional view taken along the line III-III in FIG. 1.

Referring to FIG. 2 and FIG. 3, the rechargeable battery 101 includes a electrode assembly 10 for charging and discharging the current, a case 15 enclosing the electrode assembly 10, a cap plate 20 combined to an opening of the case 15, and a first electrode terminal (negative terminal) 21 and a second electrode terminal (positive electrode terminal) 22 installed in the cap plate 20.

For example, the electrode assembly 10 may be formed when a first electrode (hereinafter, a negative electrode) 11 and a second electrode (hereinafter a positive electrode) 12 are disposed on respective sides of a separator 13, which is an insulator, and the negative electrode 11, the separator 13, and the positive electrode 12 are spirally wound in a jellyroll state.

The negative electrode 11 and the positive electrode 12 may include coated regions 11a and 12a that are formed by applying an active material to a current collector on a metal plate, and uncoated regions 11b and 12b that are formed to be exposed current collectors and that do not have the active material applied thereto.

The uncoated region 11b of the negative electrode 11 may be formed at one end of the negative electrode 11 along the spirally wound negative electrode 11. The uncoated region 12b of the positive electrode 12 may be formed at the other end of the positive electrode 12 along the spirally wound positive electrode 12. The uncoated regions 11b and 12b may therefore be disposed on respective ends of the electrode assembly 10.

For example, the case 15 may be formed to be cuboidal so as to provide a space for receiving the electrode assembly 10 and an electrolyte solution. The case 15 may have an opening for accessing the inner space from the outside on one side of the cuboid. The opening allows the electrode assembly 10 to be inserted inside the case 15.

The cap plate 20 is installed in the opening of the case 15 to close and seal the case 15. For example, the case 15 and the cap plate 20 may be made of aluminum and be welded to each other.

Also, the cap plate 20 may include an electrolyte injection opening 29, a vent hole 24, and terminal holes H1 and H2. The electrolyte injection opening 29 may provide communication between the outside of the cap plate 20 and the inside of the case 15 to allow the electrolyte solution to be injected into the case 15. When the electrolyte solution is injected, the electrolyte injection opening 29 may be sealed with a sealing stopper 27.

The vent hole 24 may be closed and sealed by a vent plate 25 so as to discharge internal pressure of the rechargeable battery 101. When the internal pressure of the rechargeable battery 101 reaches a predetermined pressure, the vent plate 25 may be incised to open the vent hole 24. The vent plate 25 may include a notch 25a for generating an incision.

The first electrode terminal 21 and the second electrode terminal 22 may be installed in the terminal holes H1 and H2 of the cap plate 20, and may be electrically connected to the electrode assembly 10. The first electrode terminal 21 may be electrically connected to the negative electrode 11 of the electrode assembly 10, and the second electrode terminal 22 may be electrically connected to the positive electrode 12 of the electrode assembly 10. Therefore, the electrode assembly 10 may be drawn out to the outside of the case 15 through the first electrode terminal 21 and the second electrode terminal 22.

The first electrode terminal 21 and the second electrode terminal 22 may form identical configurations inside the cap plate 20, and may form different configurations outside the cap plate 20, which will now be described.

The first and second electrode terminals 21 and 22 may include rivet terminals 21a and 22a installed in the terminal holes H1 and H2 of the cap plate 20, flanges 21b and 22b widely formed as a single body on the rivet terminals 21a and 22a inside the cap plate 20, and plate terminals 21c and 22c disposed outside the cap plate 20 and connected to the rivet terminals 21a and 22a through riveting or welding.

Negative and positive electrode gaskets 36 and 37 may be installed between the rivet terminals 21a and 22a of the first and second electrode terminals 21 and 22 and the insides of the terminal holes H1 and H2 of the cap plate 20, respectively, to seal and electrically insulate a space between the rivet terminals 21a and 22a of the first and second electrode terminals 21 and 22 and the cap plate 20.

The negative and positive electrode gaskets 36 and 37 may be extended to be installed between the flanges 21b and 22b and the inside of the cap plate 20 to further seal and electrically insulate the space between the flanges 21b and 22b and the cap plate 20. The negative and positive electrode gaskets 36 and 37 may prevent an electrolyte solution from leaking through the terminal holes H1 and H2 when the first and second electrode terminals 21 and 22 are installed in the cap plate 20.

Negative and positive current collecting members 51 and 52 may electrically connect the first and second electrode terminals 21 and 22 to the negative and positive electrodes 11 and 12 of the electrode assembly 10. The negative and positive electrode current collecting members 51 and 52 may be respectively attached to bottoms of the rivet terminals 21a and 22a, and the bottoms of the rivet terminals 21a and 22a may be caulked so that the negative and positive current collecting members 51 and 52 are supported by the flanges 21b and 22b and are connected to the rivet terminals 21a and 22a.

Negative and positive electrode insulating members 63 and 64 may be respectively installed between the negative and positive current collecting members 51 and 52 and the cap plate 20 to electrically insulate the negative and positive current collecting members 51 and 52 from the cap plate 20. The negative and positive electrode insulating members 63 and 64 may be attached to the cap plate 20 on a first end and may wrap the negative and positive current collecting members 51 and 52, the rivet terminals 21a and 22a, and the flanges 21b and 22b thereby stabilizing their connection structure.

The plate terminal 21c of the first electrode terminal 21 may be electrically connected to the rivet terminal 21a outside of the cap plate 20.

The insulating member 31 may be installed between the plate terminal 21c and the cap plate 20 to electrically insulate the plate terminal 21c from the cap plate 20. The cap plate 20 may be electrically insulated from the first electrode terminal 21.

A top plate 46 of the second electrode terminal 22 may electrically connect the plate terminal 22c of the second electrode terminal 22 and the cap plate 20. For example, the top plate 46 may be provided between the plate terminal 22c and the cap plate 20 and may be penetrated by the rivet terminal 22a.

The top plate 46 and the plate terminal 22c may be attached to the top of the rivet terminal 22a to caulk the top of the rivet terminal 22a. The plate terminal 22c may be installed outside the cap plate 20 when the top plate 46 is provided.

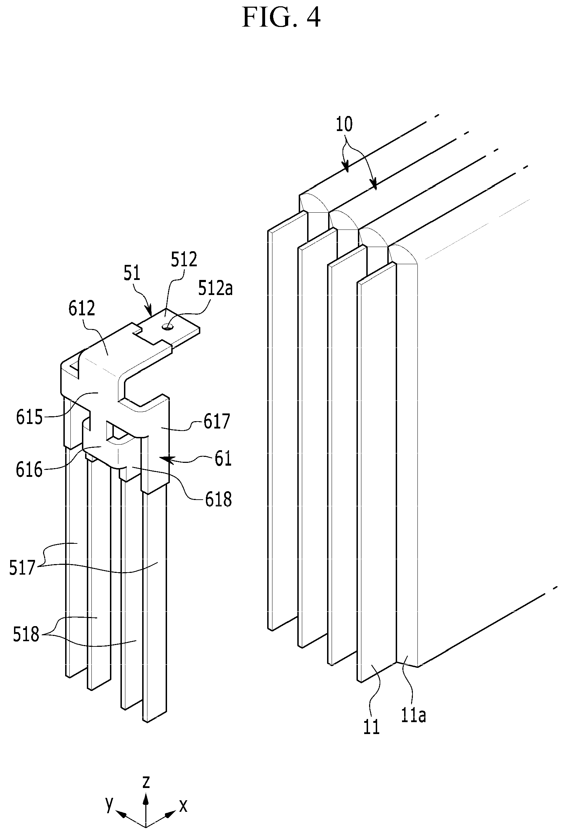

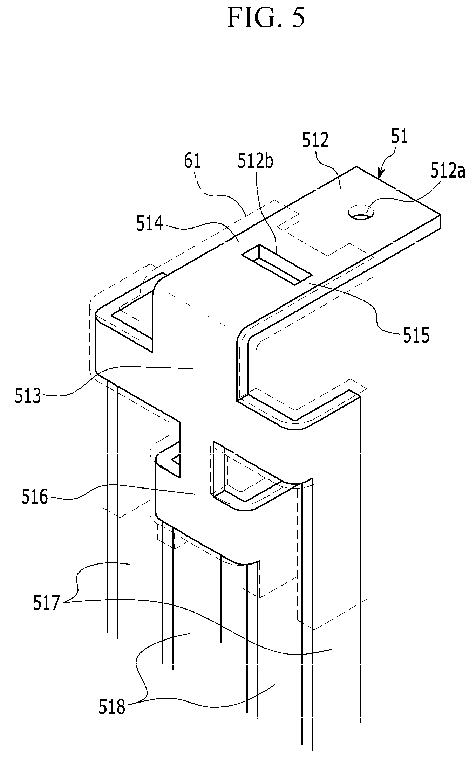

FIG. 4 illustrates an exploded perspective view of an electrode assembly and a current collecting member according to an exemplary embodiment, and FIG. 5 illustrates a partial cross-sectional view of a current collecting member according to the exemplary embodiment.

A rechargeable battery 101 according to the present exemplary embodiment is illustrated in FIG. 4 and FIG. 5 and including four electrode assemblies 10. According to implementations, the rechargeable battery may include at least one electrode assembly.

The current collecting member 51 may include a terminal connection part 512 fixed to the first electrode terminal 21, a side plate 513 that is bent from the terminal connection part 512, current collecting pieces 517 and 518 fixed to the positive electrode uncoated regions 11a, and a first current collecting fuse part 514 and a second current collecting fuse part 515 formed at the terminal connection part 512.

The current collecting member 52 may be coupled and installed to the second electrode terminal 22 may have the same structure as the current collecting member 51 coupled and installed to the first electrode terminal 21. Accordingly, an overlapping description will not be repeated.

The terminal connection part 512 may have a quadrangular plate-like shape, and may include a supporting hole 512a formed at the center thereof, into which the positive electrode terminal 21 is inserted. The terminal connection part 512 may be connected to a lower portion of the first electrode terminal 21 through welding. The side plate 513 may be bent toward the bottom of the case 15 from the terminal connection part 512 at a right angle so as to be disposed to be parallel to the side of the case 15.

Two current collecting pieces 517 may be connected to respective ends of the side plate 513, and a connection part 516 may be formed at the lower portion of the side plate 513. Two current collecting pieces 518 may be connected to the positive electrode uncoated region 11a by welding and may be connected to respective ends of the connection part 516.

In the state that the current collecting piece 517 is bent at both ends of the side plate 513 to be disposed parallel to the positive electrode uncoated region 11 a, the current collecting piece 517 may be connected to the positive electrode uncoated region 11a by welding. The current collecting piece 517 may be connected to the electrode assembly 10 positioned at the outside among the electrode assembles 10 by welding. Also, in the state that the current collecting piece 518 is bent at both ends of the connection part 516 to be disposed parallel to the positive electrode uncoated region 11a, the current collecting piece 518 may be connected to the positive electrode uncoated region 11a by welding. The current collecting piece 517 may be connected to the electrode assembly 10 positioned at the outside among the electrode assemblies 10 by welding, and the current collecting piece 518 may be connected to the electrode assembly 10 positioned at the inside among the electrode assemblies 10 by welding.

A fuse hole 512b may be formed at the terminal connection part 512. The fuse hole 512b may be separated from the supporting hole 512a in a length direction of the terminal connection part 512. The first current collecting fuse part 514 may be formed to contact one end of the fuse hole 512b and the second current collecting fuse part 515 may be formed to contact the other end thereof. The first current collecting fuse part 514 and the second current collecting fuse part 515 may be spaced apart according to a width direction of the terminal connection part 512 by the fuse hole 512b.

By the formation of the fuse hole 512b, a sum of the cross-sections of the first current collecting fuse part 514 and the second current collecting fuse part 515 may be smaller than the cross-section of the other portion or the terminal connection part 512 such that the first current collecting fuse part 514 and the second current collecting fuse part 515 may be melted to interrupt the current when an overcurrent flows to the current collecting member 51.

The heat dissipating member 61 for insulating and arc prevention may be installed at the current collecting member 51. The heat dissipating member 61 may partially enclose the current collecting member 51. The heat dissipating member 61 may be installed to enclose the side plate 513 and the connection part 516 and to enclose the terminal connection part 512 and a portion of the current collecting pieces 517 and 518.

The heat dissipating member 61 may be formed by an insert injection method, and may be connected from the terminal connection part 512 to the upper portion of the current collecting pieces 517 and 518. The heat dissipating member 61 may be formed of polypropylene (PP), perfluoroalkoxy polymer resin (PFA), polyphenylene sulfide (PPS), or polyetherether ketone (PEEK), as examples. The heat dissipating member 61 may be coated with a thin thickness on the surface of the current collecting member 51 to prevent the current collecting member 51 from contacting the case 31 and to block an arc generated in the current collecting member 51 from contacting the electrolyte solution.

If the arc generated in the current collecting member 51 were to contact the electrolyte solution, the electrolyte solution could combust or explode due to the high heat. On the other hand, if the arc is generated inside the insulating member in the state that the insulating member is coated, the arc may dissipate within the insulating member such that safety may be improved.

The heat dissipating member 61 may include an upper insulating part 612 enclosing the terminal connection part 512, a side insulating part 615 enclosing the side plate 513, a lower insulating part 616 enclosing the connection part 516, and a plurality of insulating protrusions 617 and 618 enclosing the upper portion of the current collecting pieces 517 and 518. The side insulating part 615 may be bent from the upper insulating part 612 and may extend downward. The lower insulating part 616 may be positioned under the side insulating part 615. The insulating protrusion 617 may be bent from the side insulating part 615, and the insulating protrusion 618 may be bent from the lower insulating part 616. The insulating member may be inserted into the fuse hole 512b such that the melted portions do not contact each other but may maintain a separated state when the fuse parts 514 and 515 are melted.

The heat dissipating member 61 may be made of a material with heat dissipating capacity. If the heat dissipating member 61 has heat dissipating capacity, when the overcurrent flows, the heat generated in the current collecting fuse parts 514 and 515 may be released into other portions of the current collecting member 51 through the heat dissipating member 61 such that the melting of the current collecting fuse parts 514 and 515 is delayed. The heat dissipating member 61 may transmit the heat generated in the current collecting fuse parts 514 and 515 when an overcurrent that is higher than a rated current of the battery but has intensity that is lower than a melting condition of the current collecting fuse parts 514 and 515 continuously flows, such that the current collecting fuse parts 514 and 515 are not melted. However, when the overcurrent having the low intensity continuously flows, the battery may remain in an abnormal state, and the internal temperature of the battery may continuously increase such that a dangerous state may continue.

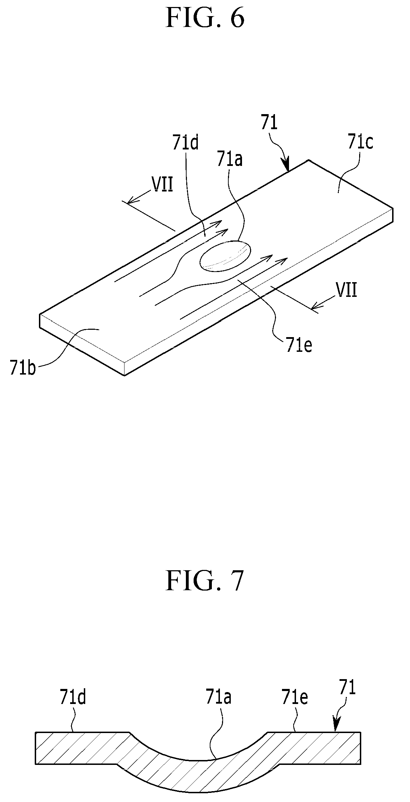

FIG. 6 illustrates a perspective view of a bus bar according to the exemplary embodiment, and FIG. 7 illustrates a cross-sectional view of the bus bar according to the exemplary embodiment.

Referring to FIG. 6 and FIG. 7, the bus bar 71 according to the present exemplary embodiment may be formed of a rectangular plate that is extended in one direction. A curved fuse groove 71a may be formed at the center in the length direction of the bus bar 71. A first terminal connection part 71b adhered to the first electrode terminal 21 of the adjacent rechargeable battery 101 by welding may be formed at one end of the length direction of the bas bar 71, and a second terminal connection part 71c adhered to the second electrode terminal 22 by welding may be formed at the other end of the length direction of the bas bar 71. A first bus bar fuse part 71d may contact one end of the fuse groove 71a, and a second bus bar fuse part 71e may contact the other end of the fuse groove 71a. The first bus bar fuse part 71d and the second bus bar fuse part 71e may be separated via the fuse groove 71a according to a width direction of the bus bar 71.

Current has a characteristic that it flows through the shortest path. Accordingly, the current does not prefer to move through the fuse groove 71a that is elongated in the bus bar 71, but instead, flows through the first bus bar fuse part 71d and the second bus bar fuse part 71e. Therefore, a cross-section of a path through which the current flows in the first bus bar fuse part 71d and the second bus bar fuse part 71e is shorter than that of the other portion. When an overcurrent is generated, much heat is generated in the first bus bar fuse part 71d and the second bus bar fuse part 71e.

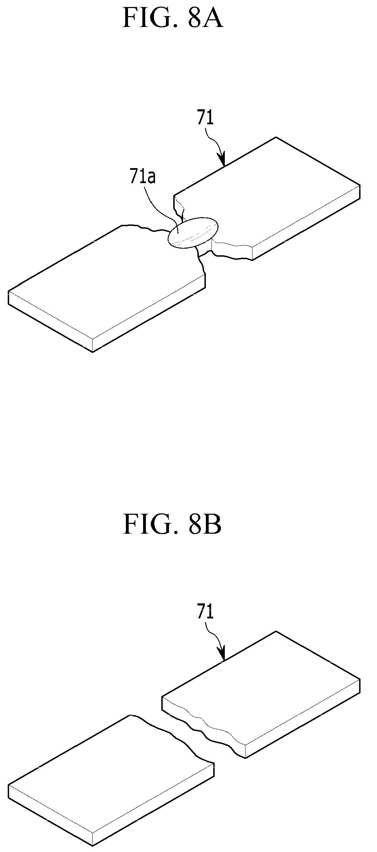

As shown in FIG. 8A and FIG. 8B, if an overcurrent is generated, the first bus bar fuse part 71d and the second bus bar fuse part 71e are firstly melted and then the fuse groove 71a is melted such that the current is blocked. The fuse groove 71a is longer than the first bus bar fuse part 71d and the second bus bar fuse part 71e such that a larger joule heat may be generated. Thereby, the fuse groove 71a may be easily melted.

An operation current at which the bus bar fuse parts 71d and 71e formed at the bus bar 71 are melted may be less than an operation current at which the current collecting fuse parts 514 and 515 are melted. The term "operation current" may refer to a mean including a target current that is designed for the fuse part to be melted as well as the current when the fuse part is melted.

The operation current of the current collecting fuse parts 514 and 515 may be from 1.2 times to 3 times the operation current of the bus bar fuse parts 71d and 71e. For example, the operation current of the bus bar fuse parts 71d and 71e may be from about 500 A to about 3,000 A, and the operation current of the current collecting fuse parts 514 and 515 may be from about 3,000 A to about 10,000 A.

In a rechargeable battery having a rated current of 60 A to 120 A, 500 A as a very high current may correspond to the overcurrent. A current of 500 A may indicate that a fault is generated inside the rechargeable battery. However, when the overcurrent of this intensity continuously flows, the current collecting fuse parts 514 and 515 may not be melted by the emission of the heat such that the overcurrent may maintain its flow. However, according to the present exemplary embodiment, when the overcurrent of this low intensity flows, the bus bar fuse parts 71d and 71e may be melted such that the current is blocked, thereby improving safety.

The bus bar 71 may include the fuse groove 71a such that the strength of the bus bar 71 may be maintained compared with forming a hole. If a hole were to be formed at the bus bar 71, the bus bar 71 could be weakened in the bus bar fuse parts 71d and 71e such that the bus bar 71 could be broken by an external impact or vibration. However, according to the present exemplary embodiment, the curved fuse groove 71a may be formed such that the height of the bus bar 71 may be increased by the curved portion and thereby the strength of the bus bar 71 may be improved.

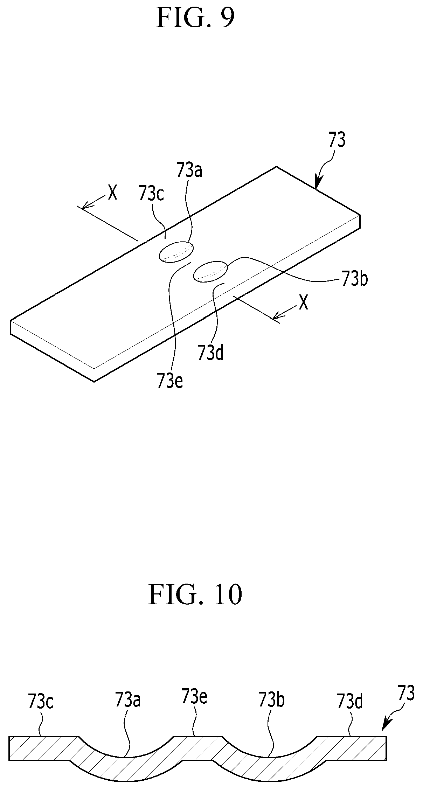

FIG. 9 illustrates a perspective view of a bus bar of a battery module according to another exemplary embodiment and FIG. 10 illustrates a cross-sectional view taken along the line X-X of FIG. 9.

A battery module according to the present exemplary embodiment may be the same as the battery module according to the previous exemplary embodiment except for a structure of the bus bar 73. Accordingly, an overlapping description thereof is not repeated.

A bus bar 73 according to the present exemplary embodiment may be formed with a rectangular plate shape that is elongated in one direction. A first fuse groove 73a and a second fuse groove 73b that are curved may be formed at the center of the bus bar 73 in the length direction. The first fuse groove 73a and the second fuse groove 73b may be spaced apart in the width direction of the bus bar 73.

A first bus bar fuse part 73c may contact one end of the first fuse groove 73a and a second bus bar fuse part 73d may contact the other end of the second fuse groove 73b. Also, a third bus bar fuse part 73e may be formed between the first fuse groove 73a and the second fuse groove 73b. The first bus bar fuse part 73c, the second bus bar fuse part 73d, and the third bus bar fuse part 73e may be spaced apart according to the width direction of the bus bar.

According to the present exemplary embodiment, a plurality of fuse grooves 73a and 73b may be formed at the bus bar 73 such that the strength of the bus bar 73 is further improved. The bus bar fuse parts 73c, 73d, and 73e may be further divided such that the operation current of the bus bar fuse parts 73c, 73d, and 73e may be more accurately controlled. The operation current of the bus bar fuse parts 73c, 73d, and 73e according to the present exemplary embodiment may be lower than the operation current of the current collecting fuse part such that the bus bar fuse parts 73c, 73d, and 73e may be firstly melted before the current collecting fuse part in the overcurrent having low strength. Accordingly, a continuous overcurrent state may be prevented.

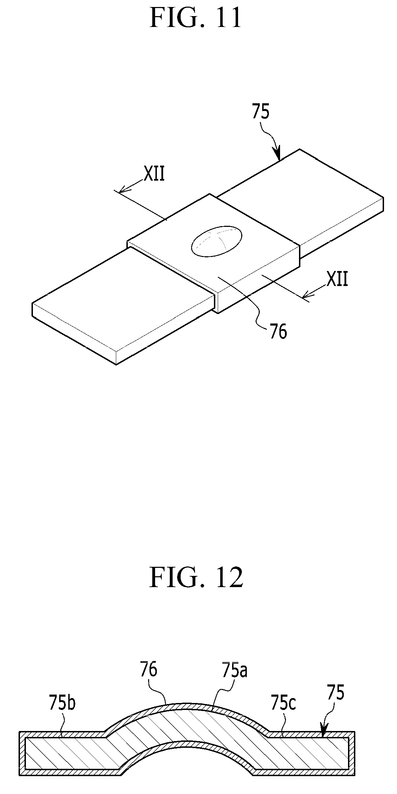

FIG. 11 illustrates a perspective view of a bus bar according to another exemplary embodiment, and FIG. 12 illustrates a cross-sectional view taken along the line XII-XII of FIG. 11.

The battery module according to the present exemplary embodiment is the same as the battery module according to the previous exemplary embodiment except for a structure of the bus bar 75. Accordingly, an overlapping description thereof is not repeated.

A bus bar 75 according to the present exemplary embodiment may be formed as a rectangular plate shape that is elongated in one direction. A curved fuse protrusion 75a may be formed at the center of the bus bar 75 in the length direction. A first bus bar fuse part 75b may contact one end of the fuse protrusion 75a and a second bus bar fuse part 75c may contact the other end of the fuse protrusion 75a.

A heat insulating member 76 enclosing the bus bar 75 may be installed at the bus bar 75. The heat insulating member 76 may be disposed at the center of the bus bar 75 in the length direction. The heat insulating member 76 may enclose the fuse protrusion 75a, the first bus bar fuse part 75b, and the second bus bar fuse part 75c. The heat insulating member 76 may formed by insert injection. In other implementation, the heat insulating member 76 may be formed by coating a film on the bus bar 75. The heat insulating member 76 may be formed of a polymer material having lower heat conductivity, as an example.

The heat insulating member 76 may protrude further in the length direction than the fuse protrusion 75a and the bus bar fuse parts 75b and 75c. The heat insulating member 76 may prevent heat generated at the bus bar fuse parts 75b and 75c from being emitted.

When an overcurrent of a low intensity flows, a large amount of heat is not generated but the heat is continuously generated. Accordingly, if a speed at which the heat is generated were to be the same as a speed at which the heat is emitted while the temperature of the bus bar fuse parts 75b and 75c is gradually increased, the bus bar fuse parts 75b and 75c would not operate and the high temperature state would be maintained. However, according to the present exemplary embodiment, if the heat insulating member 76 is provided, the heat emission of the heat may be decreased such that the bus bar fuse parts 75b and 75c may be more easily melted at a predetermined current.

Also, contamination of the rechargeable battery by remaining residue generated when the bus bar fuse parts 75b and 75c melt, and the generation of a secondary short caused by such remaining residue, may be reduced or prevented.

By way of summation and review, a battery module is formed by connecting electrode terminals through a bus bar. A rechargeable battery may explode or ignite when an abnormal reaction occurs to increase the pressure in the case because of an overcharge when the battery module is charged and discharged. Particularly, when a current of a lower intensity than an operation current of a fuse installed inside the rechargeable battery continuously flows, the fuse may not be melted by emission of heat such that the rechargeable battery may remain continuously dangerous.

In contrast, embodiments provide a battery module that may provide improved safety with respect to an overcurrent. According to embodiments, when the fuse part formed inside the rechargeable battery is not melted, the fuse part formed at the bus bar may be melted such that the current may be blocked when an overcurrent of a low intensity flows. Also, the flow of the current may be isolated by the portion where the fuse part formed at the bus bar is curved such that an increase of the resistance of the bus bar may be prevented. Accordingly, the fuse may be melted by an overcurrent of a relatively low intensity.

It is clear for a person skilled in the art that the disclosed embodiments can also be combined where possible.

## Claims

1. A rechargeable battery module, comprising:
a plurality of rechargeable batteries (101), each of the rechargeable batteries (101) including an electrode assembly (10) including a positive electrode (12) and a negative electrode (11), and a first electrode terminal (21) and a second electrode terminal (22) connected to the electrode assembly (10); and
a bus bar (71, 73, 75) electrically connecting the rechargeable batteries (101), the bus bar (71) including a bus bar fuse part (71d, 71e, 73c, 73d, 73e, 75b, 75c),
wherein the first electrode terminal (21) is connected to and installed with a current collecting member (51) that connects the electrode assembly (10) and the first electrode terminal (21), the current collecting member (51) including a current collecting fuse part (514, 515), and
**characterized in that**
the bus bar fuse part (71d, 71e, 73c, 73d, 73e, 75b, 75c ) is adapted to melt at an operation current which is less than an operation current at which the current collecting fuse part (514, 515) is melted.

2. The rechargeable battery module as claimed in claim 1, wherein the operation current at which the current collecting fuse part (514, 515) is melted is 1.5 times to 3 times the operation current at which the bus bar fuse part (71d, 71e) is melted.

3. The rechargeable battery module as claimed in claim 1 or 2, wherein:
the operation current of the bus bar fuse part (71d, 71e) is 500 A to 3,000 A, and
the operation current of the current collecting fuse part (514, 515) is 3,000 A to 10,000 A.

4. The rechargeable battery module as claimed in one of claims 1 to 3, wherein:
the bus bar (71) includes a curved fuse groove (71a), and
the bus bar fuse part (71d, 71e) contacts a side end of the fuse groove (71a).

5. The rechargeable battery module as claimed in one of claims 1 to 3, wherein
the bus bar (75) includes a curved fuse protrusion (75a), and
the bus bar fuse part (75b, 75c)contacts a side end of the fuse protrusion (75a).

6. The rechargeable battery module as claimed in one of claims 1 to 3, and 5, wherein the bus bar fuse part (75b, 75c) is enclosed by a heat insulating member (76).

7. The rechargeable battery module as claimed in claim 6, wherein:
the bus bar (75) includes a curved portion,
the bus bar fuse part is positioned to contact a side end of the curved portion, and
the heat insulating member (76) encloses the bus bar fuse part (75b, 75c) and the curved portion together.

8. The rechargeable battery as claimed in claim 6 or 7, wherein the heat insulating member (76) is formed by insert injection.

9. The rechargeable battery module as claimed in one of claims 1 to 8, wherein the current collecting fuse part (514, 515) is enclosed by a heat dissipating member (61) having heat dissipating capacity.

10. The rechargeable battery module as claimed in claim 9, wherein the heat dissipating member (61) is formed by insert injection.

11. The rechargeable battery module as claimed in one of claims 1 to 8 wherein:
the current collecting member (51) includes a fuse hole (512b),
a first current collecting fuse part (514) contacts one end of the fuse hole (512b), and
a second current collecting fuse part (515) contacts another end of the fuse hole (512b).

12. The rechargeable battery module as claimed in one of claims 1 to 3, wherein:
the bus bar (73) includes a plurality of fuse grooves (73a, 73b) that are curved and that are spaced apart in a width direction of the bus bar (73), and
the bus bar fuse part (73c, 73d, 73e) is between the fuse grooves (73a, 73b) and contacts the side end of the fuse groove (73a, 73b).

## Patentansprüche

1. Wiederaufladbares Batteriemodul, aufweisend:
eine Vielzahl wiederaufladbarer Batterien (101), wobei jede der wiederaufladbaren Batterien (101) eine Elektrodenanordnung (10), die eine positive Elektrode (12) und eine negative Elektrode (11) aufweist, und einen ersten Elektrodenanschluss (21) und einen zweiten Elektrodenanschluss (22), der mit der Elektrodenanordnung (10) verbunden ist, aufweist; und
eine Sammelschiene (71, 73, 75), die die wiederaufladbaren Batterien (101) elektrisch miteinander verbindet, wobei die Sammelschiene (71) einen Sammelschienen-Sicherungsteil (71d, 71e, 73c, 73d, 73e, 75b, 75c) aufweist,
wobei der erste Elektrodenanschluss (21) mit einem Stromsammelelement (51), das die Elektrodenanordnung (10) und den ersten Elektrodenanschluss (21) miteinander verbindet, verbunden und installiert ist, wobei das Stromsammelelement (51) einen Stromsammel-Sicherungsteil (514, 515) aufweist, und
**dadurch gekennzeichnet, dass**
der Sammelschienen-Sicherungsteil (71d, 71e, 73c, 73d, 73e, 75b, 75c) angepasst ist, um bei einem Betriebsstrom, der kleiner ist als ein Betriebsstrom, bei dem der Stromsammel-Sicherungsteil (514, 515) schmilzt, zu schmelzen.

2. Wiederaufladbares Batteriemodul nach Anspruch 1, wobei der Betriebsstrom, bei dem der Stromsammel-Sicherungsteil (514, 515) schmilzt, 1,5 mal bis 3 mal dem Betriebsstrom, bei dem der Sammelschienen-Sicherungsteil (71d, 71e) schmilzt, entspricht.

3. Wiederaufladbares Batteriemodul nach Anspruch 1 oder 2, wobei:
der Betriebsstrom des Sammelschienen-Sicherungsteils (71d, 71e) 500 A bis 3000 A beträgt, und
der Betriebsstrom des Stromsammel-Sicherungsteils (514, 515) 3000 A bis 10000 A beträgt.

4. Wiederaufladbares Batteriemodul nach einem der Ansprüche 1 bis 3, wobei:
die Sammelschiene (71) eine gekrümmte Sicherungsnut (71a) aufweist, und
der Sammelschienen-Sicherungsteil (71d, 71e) mit einem Seitenende der Sicherungsnut (71a) in Kontakt steht.

5. Wiederaufladbares Batteriemodul nach einem der Ansprüche 1 bis 3, wobei
die Sammelschiene (75) einen gekrümmten Sicherungsvorsprung (75a) aufweist, und
der Sammelschienen-Sicherungsteil (75b, 75c) mit einem Seitenende des Sicherungsvorsprungs (75a) in Kontakt steht.

6. Wiederaufladbares Batteriemodul nach einem der Ansprüche 1 bis 3 und 5, wobei der Sammelschienen-Sicherungsteil (75b, 75c) von einem Wärmeisolierelement (76) umgeben ist.

7. Wiederaufladbares Batteriemodul nach Anspruch 6, wobei:
die Sammelschiene (75) einen gekrümmten Abschnitt aufweist,
der Sammelschienen-Sicherungsteil positioniert ist, um mit einem Seitenende des gekrümmten Abschnitts in Kontakt zu stehen, und
das Wärmeisolierelement (76) den Sammelschienen-Sicherungsteil (75b, 75c) und den gekrümmten Abschnitt gemeinsam umgibt.

8. Wiederaufladbare Batterie nach Anspruch 6 oder 7, wobei das Wärmeisolierelement (76) durch Einsatzeinspritzen ausgebildet wird.

9. Wiederaufladbares Batteriemodul nach einem der Ansprüche 1 bis 8, wobei der Stromsammel-Sicherungsteil (514, 515) von einem Wärmeableitungselement (61), das ein Wärmeableitungsvermögen aufweist, umgeben ist.

10. Wiederaufladbares Batteriemodul nach Anspruch 9, wobei das Wärmeableitungselement (61) durch Einsatzeinspritzen ausgebildet wird.

11. Wiederaufladbares Batteriemodul nach einem der Ansprüche 1 bis 8, wobei:
das Stromsammelelement (51) ein Sicherungsloch (512b) aufweist,
ein erster Stromsammel-Sicherungsteil (514) mit einem Ende des Sicherungslochs (512b) in Kontakt steht, und
ein zweiter Stromsammel-Sicherungsteil (515) mit einem anderen Ende des Sicherungslochs (512b) in Kontakt steht.

12. Wiederaufladbares Batteriemodul nach einem der Ansprüche 1 bis 3, wobei:
die Sammelschiene (73) eine Vielzahl von Sicherungsnuten (73a, 73b), die gekrümmt sind und die in einer Breitenrichtung der Sammelschiene (73) beabstandet sind, aufweist, und
der Sammelschienen-Sicherungsteil (73c, 73d, 73e) zwischen den Sicherungsnuten (73a, 73b) ist und mit dem Seitenende der Sicherungsnut (73a, 73b) in Kontakt steht.

## Revendications

1. Module de batterie rechargeable, comprenant :
une pluralité de batteries rechargeables (101), chacune des batteries rechargeables (101) comportant un ensemble d'électrodes (10) comportant une électrode positive (12) et une électrode négative (11), et une première borne d'électrode (21) et une deuxième borne d'électrode (22) reliées à l'ensemble d'électrodes (10) ; et
une barre omnibus (71, 73, 75) reliant électriquement les batteries rechargeables (101), la barre omnibus (71) comportant une partie de fusible de barre omnibus (71d, 71e, 73c, 73d, 73e, 75b, 75c),
dans lequel la première borne d'électrode (21) est reliée à et installée avec un élément collecteur de courant (51) qui relie l'ensemble d'électrodes (10) et la première borne d'électrode (21), l'élément collecteur de courant (51) comportant une partie de fusible collectrice de courant (514, 515), et
**caractérisé en ce que** :
la partie de fusible de barre omnibus (71d, 71e, 73c, 73d, 73e, 75b, 75c) est adaptée pour fondre à un courant de fonctionnement qui est inférieur à un courant de fonctionnement auquel la partie de fusible collectrice de courant (514, 515) est fondue.

2. Module de batterie rechargeable tel que revendiqué dans la revendication 1, dans lequel le courant de fonctionnement auquel la partie de fusible collectrice de courant (514, 515) est fondue est de 1,5 fois à 3 fois le courant de fonctionnement auquel la partie de fusible de barre omnibus (71d, 71e) est fondue.

3. Module de batterie rechargeable tel que revendiqué dans la revendication 1 ou 2, dans lequel :
le courant de fonctionnement de la partie de fusible de barre omnibus (71d, 71e) est de 500 A à 3000 A, et
le courant de fonctionnement de la partie de fusible collectrice de courant (514, 515) est de 3000 A à 10000 A.

4. Module de batterie rechargeable tel que revendiqué dans l'une des revendications 1 à 3, dans lequel :
la barre omnibus (71) comporte une rainure de fusible courbée (71a), et
la partie de fusible de barre omnibus (71d, 71e) vient en contact avec une extrémité latérale de la rainure de fusible (71a).

5. Module de batterie rechargeable tel que revendiqué dans l'une des revendications 1 à 3, dans lequel :
la barre omnibus (75) comporte une saillie de fusible courbée (75a), et
la partie de fusible de barre omnibus (75b, 75c) vient en contact avec une extrémité latérale de la saillie de fusible (75a).

6. Module de batterie rechargeable tel que revendiqué dans l'une des revendications 1 à 3, et 5, dans lequel la partie de fusible de barre omnibus (75b, 75c) est entourée par un élément isolant thermique (76).

7. Module de batterie rechargeable tel que revendiqué dans la revendication 6, dans lequel :
la barre omnibus (75) comporte une partie courbée,
la partie de fusible de barre omnibus est positionnée pour venir en contact avec une extrémité latérale de la partie courbée, et
l'élément isolant thermique (76) entoure ensemble la partie de fusible de barre omnibus (75b, 75c) et la partie courbée.

8. Batterie rechargeable telle que revendiquée dans la revendication 6 ou 7, dans laquelle l'élément isolant thermique (76) est formé par injection d'insert.

9. Module de batterie rechargeable tel que revendiqué dans l'une des revendications 1 à 8, dans lequel la partie de fusible collectrice de courant (514, 515) est enfermée par un élément de dissipation de chaleur (61) ayant une capacité de dissipation de chaleur.

10. Module de batterie rechargeable tel que revendiqué dans la revendication 9, dans lequel l'élément de dissipation de chaleur (61) est formé par injection d'insert.

11. Module de batterie rechargeable tel que revendiqué dans l'une des revendications 1 à 8, dans lequel :
l'élément collecteur de courant (51) comporte un trou de fusible (512b),
une première partie de fusible collectrice de courant (514) vient en contact avec une extrémité du trou de fusible (512b), et
une deuxième partie de fusible collectrice de courant (515) vient en contact avec une autre extrémité du trou de fusible (512b).

12. Module de batterie rechargeable tel que revendiqué dans l'une des revendications 1 à 3, dans lequel :
la barre omnibus (73) comporte une pluralité de rainures de fusible (73a, 73b) qui sont courbées et qui sont espacées dans une direction de la largeur de la barre omnibus (73), et
la partie de fusible de barre omnibus (73c, 73d, 73e) se trouve entre les rainures de fusible (73a, 73b) et vient en contact avec l'extrémité latérale de la rainure de fusible (73a, 73b).
